# EUROPEAN PATENT APPLICATION

(11) **EP 4 163 459 A1**
(43) Date of publication of application: **12.04.2023**
(21) Application number: 22200364.2
(22) Date of filing: 07.10.2022
(51) Int. Cl.: E04F 15/10, B05D 3/06, B05D 7/26, B29C 59/04, B32B 15/082, B32B 27/08, C08J 7/04, C08J 7/12, C08L 27/06, C09D 4/00

(54) **DECORATIVE PANEL**

(30) Priority: 07.10.2021 NL 2029345; 14.04.2022 NL 2031580
(71) Applicant: Champion Link International Corporation, 2640 The Valley (AI)
(72) Inventor: BAERT, Thomas Luc Martine, 9830 Sint-Martens-Latem (BE); VAN POYER, Tom, Jiaxing, 314100 (CN); BOON, Sven, Jiaxing, 314100 (CN)
(74) Representative: Patentwerk B.V.

(57) **Abstract**

The invention relates to a decorative panel, comprising at least one substrate comprising an upper surface and a bottom surface and two pairs of opposing side edges, wherein the substrate comprises at least one core layer and at least one decorative layer and the panel comprising at least one coating layer, wherein the coating layer is provided upon the upper surface of the substrate.

## Description

The invention relates to a decorative panel, such as a floor panel, wall panel or ceiling panel. The invention also relates to a method for producing such decorative panel.

The manufacturing of decorative panels typically includes the steps of applying a finishing layer or coating layer to the surface of the boards to apply a desired gloss level that complements the decor, while ensuring the surface's resistance to staining, scratches, abrasion and the like. The finishing layer of wood-based and polymeric flooring panels in particular are generally sprayer-, roller- or curtain-applied ultraviolet-cured coatings (UV coatings). Such UV coatings are greatly preferred in industrial application because of their advantages such as speed of production, instantaneous drying time, good abrasion resistance, high clarity and gloss finish. In the field of heterogeneous resilient flooring, this coating layer is typically applied on top of a so-called transparent thermoplastic wear layer. Said wear layer has a protective function. The use of wear layers is so engrained in the industry that its binder content and its thickness form the basis of the classification requirements for level of use in industry standards. For example, the thickness of the wear layer defines the so-called Class of Use in ISO 10582 "Resilient Floor Coverings - Heterogeneous poly(vinyl chloride) floor covering - Specifications" without necessitating even a laboratory test to verify abrasion resistance, scratch resistance and the like.

These known thermoplastic wear layers are typically made of plasticized polyvinyl chloride (PVC) and are relatively soft. The plasticizer content of such plasticized PVC can reach up to 10 to 15%, versus around 85-90% PVC. This plasticized wear layer is a remnant of times when plasticized vinyl was also primarily used as core material in the production of resilient floorings, specifically "luxury vinyl tile". In recent, years, non-plasticized PVC, rPVC or rigid PVC has nearly completely replaced this plasticized vinyl as core material of resilient flooring materials. The plasticized wear layer however persists and is currently still present on basically every square meter of resilient flooring on the market. These conventional panels typically comprise an additional UV coating layer on top of the soft wear layer.

Key performance requirements for the top surface of resilient flooring, and therefore the coating layer and wear layer, include abrasion resistance (EN 13329, ASTM D4060), scratch resistance (ISO 1518), microscratch resistance (EN 16094), stain resistance (ISO 26987), slip resistance (ANSI 137.1, EN 13893), among many others. Of these, scratch resistance has always been the most difficult item to improve, and resilient flooring has therefore always had the reputation of not being very scratch resistant, especially when compared to laminate which features an extremely hard, scratch resistant melamine overlay which is known for its good scratch resistance. The wear layer, consisting mainly of PVC, has a further function in that it features a UV cut-off point of around 280-320nm, allowing only UV-A radiation to pass through and providing a UV filtering function for the decorative layer which is generally provided immediately underneath it. This generally prevents to a large degree the colour fading of the decorative layer.

It is a goal of the invention to provide a panel having an improved scratch resistance. Alternatively, an object of the present invention is to provide an alternative to the current state of the art.

The invention provides thereto a decorative panel, in particular a floor panel, wall panel or ceiling panel, the panel comprising:
- at least one substrate comprising an upper surface and a bottom surface and preferably two pairs of opposing side edges, wherein the substrate comprises:
   ∘ at least one core layer; and
   ∘ at least one decorative layer; and
- at least one coating layer, wherein the coating layer is provided upon the upper surface of the substrate and wherein at least part of the upper surface of the coating layer is textured.

The panel according to the present invention benefits of having a good scratch resistance due to the combination of both the substrate and coating layer being relatively hard and/or textured and the coating layer being provided upon the upper surface of the substrate. The panel further benefits of at least part of the upper surface of the coating layer being textured. Obtaining the panel according to the present invention is in particular possible by applying a method according to the present invention, wherein the texture is applied in the semi cured coating layer. The panel according to the present invention benefits of an enhanced tactile pattern provided thereon. The panel according to the invention enables the provision of a relatively thick coating layer whilst remaining a constructive texture. The panel further benefits of the ability to provide a texture in a controlled manner and/or in a predetermined pattern. This is particularly advantageous compared to the existing art, where textures are typically not provided into the coating layer, but where textured upper surfaces are obtained since the coating layer follows the texture of the substrate underneath said coating layer. It is for example known to provide a coating quantity of up to 100g/m2 on an existing texture which is provided in a lay or dominant direction, but which then suffers from a reduced Abrasion Class due to waviness of the surface texture to which the coating is applied. It is surmised that the coating thickness at the highest peaks of the profile of the texture or pattern is thinner than the coating thickness at the lowest valleys of the profile of the texture or pattern, causing unwanted weaknesses at specifically those places subjected to most abrasion. It can also be understood that the coating thickness at the peaks of the texture is thinner than the coating thickness at the valleys of the texture when considering a panel according to the prior art. This drawback is overcome by the panel accruing to the present invention wherein at least part of the coating layer is provided with a texture.

Preferably, a total surface area of the upper surface of the coating layer is larger than a total surface area of the upper surface of the substrate. Due to expanded portions of the coating layer forming peaks and valleys on the said upper surface of the coating layer, the total surface area of the coating layer's upper surface can be larger than the total surface area of the substrate's upper surface.

Whilst at least part of the upper surface of the coating layer is textured, it is preferred that the upper surface of the substrate is substantially flat. Hence, preferably, the upper surface of the substrate is preferably substantially free of texture and/or irregularities. The upper surface of the substrate is preferably a substantially flat surface. A substantially flat surface is understood to be a surface with a minimal waviness or texture. It can also be understood as a surface which does not feature a texture or embossing. It is conceivable that the upper surface of the coating layer comprises a textured pattern. It is for example imaginable that parts of the upper surface of the coating layer are provided with a texture whilst further parts are substantially flat. It is also conceivable that the texture defines a predetermined pattern. The coating layer having a textured upper surface was found to have a relatively good scratch resistance.

The at least one coating layer is preferably provided in a weight or quantity of at least 50 g/m2, preferably at least 100 g/m2, more preferably at least 150 g/m2. It is also conceivable that the coating is applied in a quantity up to 250 g/m2. Such relatively thick coating layer is beneficial as it provides a good basis for the desired texture. The coating layer can for example have a thickness of at least 0.1 mm, preferably at least 0.2 mm. It is possible that the coating layer has a thickness in the range of 0.2 mm to 0.5 mm, for example in the range of 0.3 to 0.4 mm.

In a preferred embodiment, the coating layer comprises multiple coating sublayers. Hence, it is conceivable that the coating layer according to the present invention consists of multiple (coating) sublayers. The coating layer preferably comprises at at least 2 coating sublayers, preferably at least 4 coating sublayers, more preferably at least 5 coating sublayers, even more preferably at least 6 coating sublayers. In a preferred, non-limitative embodiment, the coating layer comprises 7 to 9 coating sublayers. It is beneficial to have a coating layer comprising or consisting of multiple coating sublayers as a more stable coating layer can be obtained. The characteristics of the coating layer are tunable in case multiple, relatively thin coating sublayers are applied. In the present case, the application of multiple coating sublayers enables the use of a relatively thick coating layer which can be produced in a controlled manner.

The texture can for example be an impressed texture. At least part of the texture can have a dept in the range of 0.05 to 0.4 mm. It is also conceivable that at least part of the texture has a dept of 0.1 to 0.2 mm and/or from 0.2 to 0.3 mm. Such relatively deep textures can create good visible and/or tactile surface patterns. The texture can for example be a repeated pattern. It is also conceivable that the texture is adapted or in line with the decor layer, if applied.

The upper surface of the substrate preferably has a Shore D hardness of at least 80, preferably at least 85. The coating layer preferably has a Shore D hardness of at least 85, preferably at least 90. The combination of the substrate having a Shore D hardness of at least 80 at 23 degrees Celsius and the coating layer having a Shore D hardness of at least 85, the use of an additional wear layer for protective reasons can be omitted. The scratch resistance of the panel according to the present invention was found to be surprisingly good when using a substrate and coating layer according to the present invention. The coating layer is preferably directly provided upon the upper surface of the substrate. It is non-obvious for someone skilled in the art to omit the use of a wear layer and apply a substrate having a Shore D hardness of at least 80 and a coating layer having a Shore D hardness of at least 85. A conventional route to attempt to increase the scratch resistance of a panel would be to adapt the composition of the coating formulation, for example by addition of abrasive particles such as aluminium dioxide, diamond dust, silicon carbide and the like. This can increase the scratch resistance of the top surface to around 2500g-3000g, but further has the undesired effect that it drastically alters the other surface performance characteristics of the coating, especially microscratch and stain resistance.

The achieved synergy of using a coating layer having a Shore D hardness of at least 85 and the substrate having a shore D hardness of at least 80, if applies, allows the coating layer to withstand localized pressure, as such it does not deform into a soft substrate, and it will pass scratch resistance testing of 5000 to 6000g according to ISO 1518, meeting the same scratch resistance as a laminate flooring surface. The person skilled in the art would not consider removing the wear layer as a whole whilst also adapting the substrate specifications as typically the wear layer is considered a key feature of heterogenous flooring. The coating layer according to the present invention is preferably the upper layer or surface layer of the panel.

The Shore D hardness as referred to is in particular the Shore D hardness at a temperature of 23 degrees Celsius.

It is preferred that the coating is directly provided upon the upper surface of the substrate. Typically, the panel comprises a decorative layer which decorative layer is provided upon an upper surface of the core layer. Hence, in a preferred embodiment, the coating layer is directly provided upon the decorative layer, or decor layer, of the substrate. As indicated above, the use of a wear layer between the decorative layer and a surface coating layer can be omitted for the panel according to the present invention.

In a preferred embodiment, the coating layer covers at least 1%, preferably at least 25%, more preferably at least 50% and even more preferably at least 95% of the upper surface of the substrate and in particular of the decorative layer. It is also conceivable that the upper surface of the substrate and in particular of the decorative layer is substantially entirely covered by the coating layer.

The coating layer, and in particular an upper coating surface of the coating layer, has a Shore D hardness of at least 85. However, it is also conceivable that the coating layer, and in particular an upper coating surface of the coating layer, has a Shore D hardness of at least 90. The Shore D hardness of the upper coating surface of the coating layer can for example be in the range of 90 to 95. Good experimental results were obtain for a coating layer having a hardness in the mentioned range in combination with a substrate according to the present invention. It is conceivable that the panel comprises multiple coating layers. Preferably at least one, and possibly each coating layer or each coating sublayer if applied, has a Shore D hardness of at least 85. In particular the coating (sub)layer which is applied directly upon the upper surface of the panel has a Shore D hardness of at least 85. It is also conceivable that the upper coating surface of the combination of coating layers has a Shore D hardness of at least 85, possibly at least 90 or in the range of 85 to 95.

The coating layer according to the present invention is preferably at least partially crosslinked. Hence, the coating layer can be a crosslinked coating layer. In a preferred embodiment, the coating layer comprises at least one thermosetting resin. It is for example conceivable that the coating layer comprises polyurethane, in particular thermosetting polyurethane and/or that the coating layer comprises an acrylic resin, in particular a thermosetting acrylic resin. The use of a crosslinked coating layer is beneficial as this provides a good rigidity and/or strength to the coating layer. Due to the crosslinked character of the coating layer cracking of the coating layer can be at least partially prevented.

In a preferred embodiment, the coating layer comprises at least one crosslinkable prepolymer and at least one photo-initiator and/or at least one additive. The photo-initiator is typically configured to enable UV curing and/or crosslinking. A non-limitative example of a prepolymer which can be used is an acrylic prepolymer, acrylic lacquer, and/or a polyurethane prepolymer. Alternatively, at least one prepolymer can be an epoxy polyol coating. In another preferred embodiment, the coating layer comprises at least one crosslinkable oligomer, at least one monomer and/or at least one photo-initiator. The crosslinkable oligomer can for example be an acrylic oligomer or a polyurethane oligomer. Optionally, the coating layer may comprise at least one additive, for example in order to further improve scratch, abrasion, slip resistance, UV resistance and/or other factors.

The coating layer is preferably a polymer-based coating layer. The uncured coating and/or the coating layer comprises typically at least one crosslinkable prepolymer, at least one photo-initiator and/or at least one additive. The coating layer may for example comprise at least one acrylic lacquer and/or polyurethane. The at least one photo-initiator, if applied, is typically configured to enable UV curing, electron beam curing and/or crosslinking. A further additive may be applied in order to improve scratch, abrasion, slip resistance and/or UV resistance. Said photo-initiator can be any chemical compound that decomposes into free radicals when exposed to UV to initiate crosslinking of coatings directly on a surface. Said photo-initiator can be any radical photo-initiator or cationic photo-initiator. It is conceivable that the at least one photo-initator can be a compound selected from the group comprising of: acrylate- or styrene-based formulations, methyl-2-benzoylbenzoate, 2-hydroxy-2-methyl-1-phenyl-1propanone, benzyl dimethyl ketal, 1-hydroxy-cyclohexylphenyl-ketone, or methyl benzoyl formate, or other photo-initiator, or any combination thereof. It is possible that the photo-initiator can comprise of about 2 wt% to about 10 wt %, preferably 2 wt% to about 5 wt %, more preferably 3 wt % based on total weight of the coating formulation. In case a crosslinkable oligomer is applied, the at least one crosslinkable oligomer is preferably an acrylic oligomer or a polyurethane oligomer. The coating layer can be a polyurethane acrylic coating layer. The coating layer may also comprise a material selected from the group consisting of thermoplastic material, thermosetting material, polyurethane coating, acrylic coating, epoxy polyol coating, polypropylene (PP), polycarbonate (PC), abrasion resistant material, slip resistant material, water resistant material, chemical resistant material, temperature resistant material, or a combination thereof. Preferably, the coating layer is substantially free of polyvinyl chloride (PVC). It is also conceivable that the panel as such is substantially free of PVC. Alternatively, the decorative layer may comprise PVC or the decorative layer can be a PVC layer.

In a possible embodiment, at least one coating layer comprises a plurality of abrasion resistant particles, in particular chosen from the group of aluminum oxide, corundum, silicon carbide, titanium dioxide, titanium oxide and/or diamond particles or diamond dust. It is conceivable that at least part of the abrasion resistant particles is dispersed in the coating layer. In case multiple coating layers are applied, it is conceivable that at least one coating layer comprises a plurality of abrasion resistant particles. For example, only an upper layer of the coating layers could comprise a plurality of abrasion resistant particles or alternatively only a bottom layer of the coating layers could comprise a plurality of abrasion resistant particles. In case at least one coating layers comprises a plurality of abrasion resistant particles, it is beneficial that said coating layer comprises abrasion resistant particles in the range of 0.1 to 5 wt%, preferably 0.5 to 5 wt%, in particular based on total weight of the coating formulation. When applying such amount, the abrasion resistant particles can positively affect the characteristics of the coating layer whilst not changing its primary goal. In a further embodiment, the at least one coating layer may further comprise antimicrobial, antivirus, antibacterial and/or anti-fungus agents.

The at least one coating layer may further comprise at least one UV additive. At least one UV additive van be chosen from the group of UV-filtering, -scattering and/or -reducing additives. UV additives incorporated in the coating layer can provide a layer of protection against certain wavelengths of light which for example might cause discoloration or fading of the decorative layer. Hence, at least one UV additives may be configured to protect the coating against predetermined wavelengths of light. For example, when nanoparticles of titanium dioxide TiO2, ZrO2 and/or SiO2 are added to the at least one coating layer, UV rays in the wavelength between 250 nm and 390 nm are prevented from penetrating through the coating layer, effectively enabling the coating layer to have a UV cutoff of at least 320nm, more preferably at least 250nm while maintaining transparency in the visible electromagnetic spectrum. Hence, at least one UV additive may comprise titanium dioxide (TiO2), zirconium dioxide (ZrO2) and/or silicon dioxide (SiO2). It is preferred that at least part of the UV additives are smaller than 0.5 microns, more preferably smaller than 0.2 microns. At least part of the UV additives may for example have an average diameter which is smaller than 0.5 microns, preferably smaller than 0.2 microns.

It is also conceivable that the at least one coating layer comprises UV absorbing compounds, such at but not limited to UV absorbing nanoparticles and/or UV absorbing microparticles. The UV absorbing compounds could for example be hydroxyphenyl benzotriazoles, 2-(2-hydroxyphenyl)-benzotriazole, hydroxyphenyl-s-triazines, oxalanilides, and 2-hydroxybenzophenones. The UV absorbing nanoparticles and/or microparticles can be prepared via the emulsion and the dispersion copolymerization of the vinylic monomer 2-(2' -hydroxy-5' - methacryloxyethylphenyl)-2H-benzotriazole (Norbloc (NB)) with the crosslinking monomer divinylbenzene.

Preferably, the haze percentage, or haze value, of the panel, and in particular of the coating layer, is below 4%. The haze value is the fraction of the transmitted light which scatters and deviates from the incident beam by more than 2.5 degrees. High haze values would mean that the coating layer will appear milky or cloudy when viewed in the film. Moreover, clarity values of the coating layer are preferably above 90%. The clarity value describes the degree to which fine details may be resolved in an object viewed through the film. By having high clarity values, a clear and sharp image of the printed decor layer can be observed. It is conceivable that as the clarity value decreases, the printed decor layer appears blurry or out of focus.

The deposition technique can also influence the performance of the UV coatings, if applied, especially those used with excimer lasers. The deposition techniques can be resistance heated (RH) and e-beam (EB) heated evaporation and ion-beam sputtering (IBS). It is observed that IBS films exhibit the lowest surface roughness but high backscatter, highest refractive index, high stress, and homogeneous microstructure compared to films deposited by thermal evaporation techniques. Moreover, higher laser damage thresholds are predicted for the thermal processes than for IBS depositions. Hence, at least one coating layer can be a deposited coating which is applied via a deposition technique chosen from the group of resistance heated (RH) and e-beam (EB) heated evaporation and ion-beam sputtering (IBS).

The UV additive, if applied, preferably has a relatively low level of transition metal impurities or other elements that absorb in the UV. Preferably, the impurity levels are below 0.5% and more preferably below 0.1% by weight. Moreover, based on tests, the addition of the elements nickel (Ni), chromium (Cr), molybdenum (Mo), tungsten (W), and iron (Fe) caused significant UV absorption below 300 nm wavelength, wherefore the amount of said elements is preferably relatively low.

It is conceivable that the at least one coating layer consists of multiple successive coating layers. It is in the realm of the invention that at least one of the multiple successive coating layers comprises at least one UV additive. It is beneficial if at least one of the successive layers comprises abrasion resistant particles in the range of 0.1 to 5 wt%, preferably 0.5 to 5 wt%, in particular based on total weight of the coating formulation.

The at least one coating layer is preferably provided in a weight of at least 50g/m2, more preferably at least 100g/m2, most preferably at least 150g/m2. The at least one coating layer can subsequently be subjected to a UV curing step at a power and energy level sufficient to partially cure it thus affording a semi-cured or gellified coating layer made up of low molecular weight cross-linked oligomers. This allows such oligomers to display a soft consistency to be applied with a texture by mechanical means on at least part of the semi-cured coating layer. Partially cured layer or semi-cured layer are also understood as a coating layer in a substantially gel state. All the above terms can be used interchangeably and convey the same meaning. It is shown through experimentation that a coating applied at a weight of 180g/m2 on a flat surface and subsequently provided with a texture has a NALFA AC rating of 4 (more than 4000R before puncturing); whereas the same coating weight applied on a textured surface fails to reach even AC1 (400R before puncturing). It is shown that at such a coating weight, the applied texture can have a depth of up to 0.4mm, preferably up to 0.3mm, but it is conceivable that any range of texture depths of 0.05 to 0.4 mm are applied. The coating layer according to the present invention allows the application of deep surface textures while maintaining the advantage of having a good scratch resistance.

The coating layer may further comprise an antimicrobial agent that can be incorporated therein before the curing step. The antimicrobial agent embedded in the coating layer, if applied, is conceived to be able to inhibit the emergence and/or growth of microbes such as fungus, bacteria (i.e. gram positive and gram negative bacteria such as Staphylococcus aureus, Kleibsella pneumoniae and Salmonella and the like), yeast and other pathogens including nonpathogens on the surface of the floor panel. It is conceivable that the antimicrobial agent may be organic or inorganic, preferably non-toxic and without heavy metals. The antimicrobial agent may be selected from the group consisting of quaternary ammonium compounds, sesquiterpene alcohols, halogenated phenyl ethers, halogenated carbanilides, halogenated salicylanilides, bisphenolic compounds, general phenols, formaldehyde, pyridine derivatives and hexachlorophene. The aforementioned antimicrobial agents are preferred over disinfectants such as iodine and complexes thereof as these are highly pigmented and may cause detrimental effects to the chemical, mechanical and physical properties of the coating layer, specially to the transparency/clarity of the coating layer which is desired in order to conserve the aesthetics of the panel. The antimicrobial agent, if applied, is preferably present in the coating layer from about 0.05% to about 5% by weight, preferably from about 0.070% to about 3.5%, more preferably from about 0.080% to about 3%. It is experimentally found that said amount of antimicrobial agent in the coating layer is able to survive crosslinking/polymerization during the curing process, or in other words is not destroyed during curing, without causing undesirable effects to the chemical, mechanical and physical properties of the coating layer. Said amount of antimicrobial agent in the coating layer is also experimentally found to last the lifetime of the coating layer while also being sufficient to inhibit the formation and/or growth of microbes.

For each of the described additives which may be applied, it is also conceivable that at least one coating sublayer, multiple coating sublayers or each coating sublayer comprises such additive, if applied.

In a preferred embodiment, the coating layer is substantially transparent and/or translucent. In this way, the use of the coating layer will not negatively affect the appearance of the decorative layer. The aesthetic appearance of the panel could for example also be enhanced by the coating layer comprises at least one matting agent, such as a matting powder. It is also conceivable that the coating layer is subjected to an excimer finishing step for obtaining higher density at the top surface of the coating layer, for example within 1 to 5 µm from the top surface. It is for example conceivable that an upper part of coating layer has a higher density than the rest of the coating layer. For example, a layer of about 2 µm to 5 µm of the upper part of coating layer may have a higher density than the rest of the coating layer. Hence, it is conceivable that the coating layer comprises a (high density) crust layer which is integrally formed at the upper part of the coating layer.

It is conceivable that the core layer of the substrate comprises at least one Vicat modifier in particular in order to further improve the material properties of the core layer. The core layer may for example comprise at least one additive configured to increase the Vicat softening temperature. The Vicat softening temperature of the core layer is preferably at least 80 degrees Celsius, more preferably at least 85 degrees Celsius. It is also conceivable that the Vicat softening temperature of the core layer is in the range of 80 to 95 degrees Celsius or 85 to 95 degrees Celsius. The Vicat softening temperature of the core layer could for example also be substantially 90 degrees Celsius. Optionally, the Vicat softening temperature of the core layer can be higher than 95 degrees Celsius or higher than 100 degrees Celsius. At least one additive could for example comprise acrylonitrile styrene acrylate (ASA), acrylonitrile butadiene styrene ABS, a thermoset system and/or an epoxy system. The additive can also be referred to as Vicat modifier. The use of at least one Vicat modifier may in particular be of interest when the core layer of the substrate comprises a thermoplastic mineral composite, having a mineral to thermoplastic ratio of at least 3:1. This is to ensure the Shore D hardness is maintained and/or controlled at elevated temperatures.

The surface roughness of at least part of the coating layer, in particular the upper coating surface, is preferably at least 1 µm Ra, preferably at least 2 µm Ra, more preferably at least 3 µm Ra. At least part of the coating layer may comprise a plurality of micro-undulations while maintaining a surface roughness Ra of at least 3 µm, wherein at least a part of the micro-undulations has a peak to valley height Rz of 5 µm or less and/or wherein at least a part of the micro-undulations has a peak to valley height Rz of at least 5 µm. At least part of the coating layer may also comprise a plurality of micro-undulations while maintaining a surface roughness Ra of at least 3 µm, wherein at least a part of the micro-undulations has a peak to valley height Ry of 5 µm or less and/or wherein at least a part of the micro-undulations has a peak to valley height Ry of at least 3 µm. In some embodiments, the surface of the coating layer comprises varying surface heights forming peaks and valleys. Different dimensional characteristics can be measured using the said surface heights, peaks, and valleys. These dimensional characteristics must be specified to positively affect the slip resistance of the surface. For example, R3z or the mean of the third maximum peak-to-valley heights in the evaluation length can preferably set to at least 5 µm. Moreover, the maximum height of the third highest peak to the third lowest valley in each cut-off length, denoted by R3y, can also be preferably set to at least 5 µm. Such embodiment would enable sufficient slip resistance for the surface of the coating layer, and thus for the panel as such. The obtained roughness and/or peak to valley high can for example be achieved by having multiple coating layers each with micro-undulations and/or micro creases with a compounding effect.

An adequate surface roughness of the upper surface of the substrate can positively contribute to the bonding between the coating layer and the substrate. It is in particular preferred that the substrate has a (surface) roughness (Ra) of at least 0.5 µm. More preferably, the roughness of the substrate is at least 1 µm. Hence, the upper surface of the substrate may have a roughness of at least 0.5 µm, preferably at least 1 µm. These characteristic enables proper bonding between the upper core layer and the coating layer. The upper surface of the substrate of the panel according to the present invention is preferably substantially flat. However, alternatively upper surface of the substrate of the panel according to the present invention optionally comprises a macrotexture with depths and/or heights imitating a real stone or wood surface, preferably applied by mechanical or chemical means. If applied, is preferred that the maximum texture depth is at most 0.6 mm, preferably around 0.3 mm, with a variance of maximum 0.1 mm.

The upper surface of the substrate of the panel according to the present invention typically has a Shore D hardness of at least 80. However, in a preferred embodiment, the upper surface of the substrate of the panel has a Shore D hardness of at least 85, and possibly at least 90. It is preferred that the Shore D hardness of the upper coating surface of the coating layer is higher than the Shore D hardness of upper surface of the substrate. It is preferred that the Shore D hardness of the coating layer and the substrate is within a difference of 5.

The panel preferably comprises at least one decor layer. It is conceivable that at least one decor layer is attached to said the core layer, if applied. It is also conceivable that the decor layer is a print layer. It is also conceivable that at least one decorative layer is a print layer, in particular a digital print layer. The decor layer may also form integral part of the core layer. In a beneficial embodiment of the panel, at least part of the upper surface of the core layer is provided with at least one decorative pattern or decorative image. It is for example possible that such decorative image or pattern is provided via printing, for example via digital and/or inkjet printing. It is also possible that at least one decorative pattern is formed by relief provided in the upper surface of the core layer or panel. It is also conceivable that the decor layer or decorative layer is a separate layer, for example a comprises a high-pressure laminate (HPL), a veneer layer and/or a ceramic tile. In a preferred embodiment, at least one decorative layer comprises a thermoplastic film or a ply of cellulose. It is for example possible that the decor layer comprises a plurality of impregnated layers containing lignocellulose but also a wood veneer, a thermoplastic layer, a stone veneer, a veneer layer or the like and/or a combination of said materials. The veneer layer is preferably selected from the group comprising of wood veneer, cork veneer, bamboo veneer, and the like. Other materials such as ceramic tiles or porcelain, a real stone veneer, a rubber veneer, a decorative plastic or vinyl, linoleum, and laminated decorative thermoplastic material in the form of foil or film. The thermoplastic material can be PP, PET, PVC and the like. The design of the decorative layer can be chosen from a design database which includes digitally processed designs, traditional patterns, pictures or image files, customized digital artworks, randomized image pattern, abstract art, wood-patterned images, ceramic or concrete style images, or user-defined patterns. The designs can be printed or reproduced using laser printers, inkjet printers, or any other digital printing means including the conventional printing methods. Various types of inks can also be used to suit the design needs of the decor layer. Preferably, the ink used during the printing method comprises properties such as but is not limited to waterproofness, lightfastness, acid-free, metallic, glossy, sheen, shimmering, or deep black, among others. It is desirable that the decorative layer is visually exposed by the coating layer being a substantially transparent coating layer. The decor layer may comprise a pattern, wherein the pattern is printed via digital printing, inkjet printing, rotogravure printing machine, electronic line shaft (ELS) rotogravure printing machine, automatic plastic printing machine, offset printing, flexography, or rotary printing press. The thickness of the decorative layer is preferably in the range of 0.05 mm and 0.10 mm, for example substantially 0.07 mm.

The core layer can also be called the carrier layer, carrier plate, carrier core and/or panel core. The core layer is in particular configured to provide rigidity and strength to allow a floating installation, and also provides a substantially flat surface on which to provide the decorative layer.

The substrate and in particular the core layer may comprise a composite material. The core layer may for example comprise a filler and at least one binder. The binder can be selected from, but is not limited to, thermoplastic or thermoset resins including but not limited to vinyl, polyvinyl chloride (PVC), polyethylene (PE), polyurethane (PU), acrylonitrile butadiene styrene (ABS), melamine, and/or polypropylene (PP). Preferably, the ratio of weight percentages of filler relative to binder is at least 1:1, more preferably at least 2:1, most preferably at least 3:1. The filler material used in the core layer can comprise organic or inorganic materials which includes but is not limited to cellulose materials, fibrous materials, kraft paper, saw dusts, wood dusts, wood fibers, long wood fibers, short wood fibers, sand, lime, volcanic ash, plants-based fibers such as mushroom fibers, cotton fibers, bamboo fibers, abaca fibers, pineapple fibers, magnesium compounds, magnesium oxide, magnesium carbonate, limestone, polymeric fibers, glass fibers, carbon-based fibers, polymeric pellets, or hollow microspheres or particles having size ranging from 1 to 1000 micrometers made of but is not limited to ceramics, glass, polymers, composites, or metals. Preferably, the core layer includes at least one filler selected from the group consisting of: minerals, preferably calcium carbonate; and pigments, modifiers, fibers, such as: glass fiber, wood, straw and/or hemp. The fibers can be loose fibers and/or interconnected fibers to form a woven or nonwoven layer. Preferably the core layer further includes at least one additional filler selected from the group consisting of steel, glass, polypropylene, wood, acrylic, alumina, curaua, carbon, cellulose, coconut, kevlar, Nylon, perlon, polyethylene, PVA, rock wool, viburnum and fique. This can further increase the strength of the panel itself and/or the water resistance and/or fire resistance of the panel.

It is conceivable that at least one core layer comprises a composite material, in particular a mineral composite material, more in particular a mineral thermoplastic composite. The core layer may for example comprise a magnesium oxide or MgO-based composite. The core layer may for example comprise MgCI2 and/or MgSO4. The composite core layer may for example comprise at least 20% by weight of magnesium oxide. A non-limiting example of a possible composite core layer, is a core layer comprising 30 to 40% by weight magnesium oxide, 10 to 20% by weight magnesium chloride or magnesium sulfate, 10 to 15% by weight water, 5 to 10% by weight magnesium hydroxide, 5 to 10% by weight calcium carbonate, 5 to 50% by weight lignocellulose (e.g. wood fibers or cork) and/or 10-15% by weight additives. It is found that a composite core layer, in particular a mineral composite core layer, has a good stability to heat which is also beneficial for the panel as such. The density of at least one core layer is preferably between 1200 and 2000 kg/m3, more preferably between 1400 and 1600kg/m3. However, it is also conceivable that the density of at least one core layer is about 2000 kg/m3. The latter is for example possible when the core layer comprises an thermoplastic mineral composite. The mineral material can be selected from the group of magnesium oxide, magnesium carbonate, magnesium oxysulfate, magnesium oxychloride cement (MOC), magnesium chloride (MgCI2), magnesium sulfate (MgSO4), Sorel cement, fiber cement, MOS cement, limestone, calcium carbonate, calcite mineral, stone, chalk, clay, calcium silicate and/or talc. In some embodiments, the mineral material is preferably present as particulate mineral filler of at least 200 mesh, preferably more than 300 mesh. The thermoplastic mineral composite core layer may for example comprise 60 to 70% by weight of calcium carbonate, 20 to 25% by weight of polyvinyl chloride and possibly 5 to 10% by weight of additives. At least one core layer may comprise a density gradient, for example wherein the density near the upper surface is higher than the density near the bottom surface, or wherein the density near the upper surface and the bottom surface is higher than the density of a central region situated between said upper surface and bottom surface. A further non-limiting example of a possible core layer is an HDF based core layer comprising cellulose and a thermosetting resin. It is also conceivable that the core layer is a wood-based core comprising cellulose and/or a geopolymer based on magnesium oxide. The panel and/or the core layer is preferably waterproof.

In a preferred embodiment the core layer may comprise at least one additive material, advantageously including surface active substances (surface active substances, SAS), such as methyl cellulose, "Badimol" plasticizing materials and other cationic active SAS, in particular configured to improve the rheology of the mixture. The core may also include bentonite. Bentonite is a finely ground natural product suitable for increasing the rheological and waterproof properties of the panel itself. The core layer may also comprise a combination or composite of any of the materials previously mentioned. It is conceivable that the composite material comprises at least 20% by weight of filler and/or 15% to 50% by weight of a binder. This range is found to secure sufficient stability and strength of the core layer while also allowing for necessary flexibility thereof and improving temperature resistance as well. It is beneficial to apply a substrate or core layer having a rigidity of at least 3500 MPa, in particular when measured according to EN310 or ASTM D790.

The substrate and/or core layer may for example have a thickness of at least 4 mm. It is for example possible that the thickness of the core layer is between 3 and 9 mm, preferably between 4 mm and 5.5 mm or between 5.5 mm and 7 mm. It is conceivable that at least one core layer comprises at least one reinforcing layer. The reinforcing layer can for example be a reinforcing mesh. Possibly, the core comprises at least two reinforcing layers, wherein a first reinforcing layer is located near the upper surface and wherein a further reinforcing layer is located near the bottom surface. Preferably, at least one reinforcing layer comprises a mesh or web, preferably comprising fiberglass, jute and/or cotton.

The substrate, and in particular the core layer, may optionally comprise complementary coupling parts. The core could for example comprise at least one pair of opposite side edges which are provided with complementary coupling parts. The complementary coupling parts, if applied, are typically configured for interconnecting adjacent panels. Typically, at least one pair of opposite side edges of the core layer is provided with complementary coupling parts. For example, the core layer comprises at least one pair of complementary coupling parts on at least two of its opposite side edges. Said coupling parts may for example be interlocking coupling parts configured for mutual coupling of adjacent panels on multiple directions. Preferably, said interlocking coupling parts provide locking in both horizontal and vertical directions. Any suitable interlocking coupling parts as known in the art could be applied. For example, said interlocking coupling parts may be in the form of complementary tongue and groove, male and female receiving parts, a projecting strip and a recess configured to receive said strip or any other suitable form. It is conceivable the complementary coupling parts require a downward scissoring motion when engaging, or are locked together by means of a horizontal movement. It is further conceivable that the interconnecting coupling mechanism comprise a tongue and a groove wherein the tongue is provided on one side edge of one pair of opposite side edges, and the groove is provided on the other side edge, or an adjacent side relative to that of the tongue, of the same pair of opposite side edges. Such a design of coupling mechanism is well-known in the art and has proven highly suitable for panels for floor coverings such as a floating floor. In a further embodiment it is possible that the interconnecting coupling mechanism have an interlocking feature which prevents interconnected panels from any free movement (play). Such an interlocking feature may be a projection and a respective recess provided on the respective opposite side edges by which neighboring panels interlock with each other. It is conceivable for provisions of reinforcement in the interlocking coupling parts to improve strength and prevent breakage thereof during installation of the panels. For example, the complementary or interlocking coupling parts may be reinforced with materials such as but not limited to fiberglass mesh, reinforcing sheets, carbon fibers, carbon nanotubes, ceramics, glass, arrays of metallic or non-metallic rods, or polymer compounds integrally formed in the core layer. It is also conceivable that a strengthening coat layer of micro or nanotechnology is added on the surface of the interlocking coupling parts. The panel according to the present invention and/or the panel obtained via the method according to the present invention is suitable for use in flooring, wall or ceiling coverings preferably featuring a locking mechanism. As such a 'floating' covering can be assembled by interconnecting the individual panels with each other at all four sides, without the need for adhesives.

The panel may comprise at least one further layer, such as but not limited to a backing layer. The method according to the present invention may also include the step of providing and/or attaching at least one backing layer to the bottom surface of the core layer. In case a backing layer is applied, the backing layer can be adhered on the bottom surface of the substrate, and in particular of the core layer via an adhesive. The backing layer is preferably made of a polymer material, for example but not limited to polyurethane. The backing layer may also be a sound absorbing layer. Such sound absorbing backing layer may further contribute to the good acoustic properties of the panel. Such backing layer may also be referred to as an acoustic layer. The backing layer may be composed of a foamed layer, preferably a low-density foamed layer, of ethylene-vinyl acetate (EVA), irradiation-crosslinked polyethylene (IXPE), expanded polypropylene (XPP) and/or expanded polystyrene (XPS). However, it is also conceivable that the backing layer comprises nonwoven fibers such as natural fibers like hemp or cork, and/or recycled/recyclable material such as PET. The backing layer, if applied, preferably has a density between 65 kg/m3 and 300 kg/m3, most preferably between 80kg/m3 and 150 kg/m3.

The invention also relates to a method for producing a decorative panel, in particular a floor panel, wall panel or ceiling panel, comprising the steps of:
a) providing at least one substrate comprising an upper surface and a bottom surface and preferably two pairs of opposing side edges, wherein the substrate comprises:
   ∘ at least one core layer; and
   ∘ at least one decorative layer;
b) applying at least one coating layer upon the upper surface of the substrate, wherein the coating layer is preferably a cross-linkable coating layer;
c) enabling at least part of the coating to cure such that a semi cured coating layer is obtained; and
d) applying a texture, preferably at least part of a texture, upon at least part of the upper surface of the semi cured coating layer.

The method may also comprise the step of curing said coating layer such that a crosslinked coating layer is obtained, preferably a coating layer having a Shore D hardness of at least 85.

The method results in the provision of a panel according to the present invention. The substrate applied at step a) can be any of the substrates described for the panel according to the present invention. The upper surface of the substrate of the panel may for example have a Shore D hardness of at least 85, and possibly at least 90 in particular at 23 degrees Celsius. It is conceivable that the coating layer, and in particular an upper coating surface of the coating layer, has a Shore D hardness of at least 90. The Shore D hardness of the upper coating surface of the coating layer can for example be in the range of 90 to 95. It is preferred that the Shore D hardness of the upper coating surface of the coating layer is higher than the Shore D hardness of upper surface of the substrate. The curing step can also be referred to as a drying step. However, it is also conceivable that the curing step is an UV curing step. The coating layer (applied at step b)) comprises preferably at least one cross-linkable prepolymer and at least one photo-initiator. It is also conceivable that the coating layer comprises at least one thermosetting resin.

Preferably, the coating layer (applied at step b)) comprises at least one cross-linkable prepolymer and at least one photo-initiator. It is also conceivable that the coating layer comprises at least one thermosetting resin.

In a preferred embodiment, the method comprises the steps of applying a plurality of coating sublayers, wherein each applied coating sublayer is at least partially cured prior to applying a subsequent coating sublayer such that a semi cured coating layer is obtained. It is beneficial to apply the subsequent coating sublayer upon a coating sublayer which is not yet fully cured since this enables to control the state overall coating layer. It is beneficial that the overall coating layer is at least semi cured when the texture is applied upon its upper surface. This enables that a predetermined and/or detailed texture can be applied in a controlled manner. At least part of the texture is preferably applied via at least one roller. Alternatively, at least part of the texture can be applied via at least one press plate. It is beneficial if the surface energy of the roller is lower than the surface energy of the semi cured coating layer. The surface energy of the roller is preferably at most 25 mN/m or 25dyn/cm. At least part of the texture preferably has a dept in the range of 0.05 to 0.4 mm.

In another preferred embodiment, the curing step (step c)) is a UV curing step. The step of enabling at least part of the coating to cure such that a semi cured coating layer is obtained, is thus effected with UV light.

The step of enabling at least part of the coating to cure can be effected with UV light having a wavelength in a range between 315 - 450 nm. In general, UVV light (400-450nm) is known to provide an improved through-cure but as it has a very low energy level, its efficiency in industrial applications is limited. UVA light (315-400nm) is generally more preferred for curing, as its higher energy level allows a more complete activation of photo initiators within the coating

Preferably, the UV light in the curing step (step c)) has a wavelength from 390-450 nm, more preferably 390 - 400 nm, most preferably about 395 nm. UV light has a different penetration depth depending on its wavelength which corresponds to its energy level: the longer the wavelength, the deeper the penetration; the shorter the wavelength, the shallower the penetration. Common UV lamps such as those based on mercury, emit simultaneously a wide range of wavelengths from UVV to UVC in a gaussian distribution. This range of wavelengths releases at least part of its energy at the surface of the provided at least one coating layer, thereby providing an unwanted surface curing, crust, or inconsistent curing gradient. Such a surface curing or crust present in the semi-cured coating forms cracks, visible as white blemishes, when an embossing is applied to it with mechanical means. The UV light in the curing step (step c)) having a wavelength from 390 - 450 nm effectively reduces the degree of surface curing while maintaining an optimal energy level. The 395 nm UV wavelength provides an ideal balance between through-cure and curing capability.

Preferably, a difference between a largest and smallest UV wavelength for curing at least part of the coating is limited to 10 nm, more preferably 5 nm, most preferably 1 nm. This ensures no curing gradient, surface curing or crust forming on the top surface of the at least one coating layer.

Preferably, the at least one coating layer is pre-gelled by utilizing a narrow range of wavelengths, such as described above, allowing a through-cure of the provided at least one coating layer without forming a surface curing or crust at its top surface.

In a preferred embodiment, the step of applying a texture, preferably at least part of a texture, upon at least part of the upper surface of the semi cured or pre-gelled coating layer is achieved through a feature transfer technique or a foil transfer method. A foil layer, foil transfer layer, film layer, film transfer layer, texture layer, or a texture transfer layer is used in the said foil transfer method. The foil transfer layer comprises at least one surface or part of the surface having surface properties that can be transferred to the semi cured or pre-gelled coating layer. The properties that can be feature transferred or foil transferred include, but is not limited to, desired texture or combination of textures, smoothness, flatness, roughness, coarseness, haptic features, markings, indicia, patterns, matte-ness, sheen, or combinations thereof. This foil transfer method also relies on the controlled surface energy of the film layer which enables the said transferring of the film layer's properties to a coating or wear layer, or any surface that is compatible to the said technique.

The foil transfer layer is then preferably applied on top of the uncured or pre-gelled coating layer. The foil layer is substantially flat when laid to the coating layer during the application until the curing step. The foil layer is then removed on top of the coating layer. This then transfers the surface properties of the foil transfer layer to the top surface of the coating layer. For instance, when the surface property of the foil transfer layer is texture or tactile features having a plurality of embossing, microstructures, or micro-undulations, then this surface property is transferred to the coating layer. The transferred property is then added to the inherent properties of the coating or wear layer.

By using this process, the complexity of combining different textural features is greatly reduced. Instead of having a multi-stage curing process to achieve the multi-textured surfaces, the feature transfer via the film or foil layer can be used which requires only two curing steps. Further curing steps are then made optional.

The foil transfer layer could further at least partly be made of a low surface energy plastic (LSE plastic), in particular chosen from the group of polypropylene (PP), polyethylene (PE or HDPE), polypropylene (PP), polyethylene (PET), polystyrene (PS), acetal and/or ethylene vinyl acetate (EVA). These material(s) benefit of a relatively low surface energy which is beneficial for use in the method according to the present invention. In addition to that the coating layer, typically having a higher surface tension, would not stick to the foil transfer layer. This enables smooth removal of the foil transfer layer which could be re-used after application thereof. The foil transfer layer can for example be a (textured) sheet of a low surface energy plastic. Such plastic material can benefit of being relatively strong but also flexible making the low surface energy plastics suitable for frequent use. The foil transfer layer may also comprise a material selected from the group consisting of thermoplastic material, thermosetting material or a combination thereof. The foil transfer layer may for example comprises a material selected from the group consisting of low density polyethylene (LDPE), linear low-density polyethylene (LLDPE), ultra-low density polyethylene (ULDPE), metallocene polyethylene (mPE), high density polyethylene (HDPE), polypropylene (PP), polycarbonate (PC), polyvinyl chloride (PVC), polyester film, polyvinylidene chloride (PVDC), polyamide (PA), or combinations thereof.

The configuration of the foil transfer layer may depend upon the preferred characteristics of the final (cured) coating layer and/or of the panel. Typically, at least part of the (at least partially) cured coating layer has a predetermined surface height variation. The final gloss level of the panel, or of the coating layer, at least partially depends on the applied foil transfer layer. Typically, a relatively high microscopic roughness of the coating layer will cause a matte surface and a relatively low roughness will cause a glossy surface of at least 60%, preferably in the range of 80% to 100%. However, it is also conceivable to adapt the foil transfer layer such that gloss levels in the range of 5% to 50% are obtained. Also, the texture pattern or surface pattern of the foil transfer layer may have influence on the final product. It is for example possible that at least part of the foil transfer layer comprises a randomized surface pattern. It is also conceivable that at least part of the surface pattern of the foil transfer layer defines a repeated pattern. It is thus also possible that is that the coating layer has a selectively repetitive pattern. Specific modification of the (surface pattern of the) foil transfer layer can in fact realize a gloss level manipulation. It is for example also conceivable that the surface pattern is designed such that a panel having different gloss level zones is obtained. The foil transfer layer may also comprise a texture, degree of roughness, markings, indicia, or haptic features. At least part of the foil transfer layer may have a gloss level between 40 to 90%. The foil transfer layer may have a matte or semi-matte finish.

At least one coating layer can for example be applied with a weight of at least 50 g/m2 per layer, preferably at least 100 g/m2, more preferably at least 150 g/m2. Preferably, at least one coating layer is applied in a total weight or quantity up to 250 g/m2. It is for example also conceivable that each coating layer, if applied, is applied with a weight in a range 40 to 60 g/m2. Each layer may be dried or precured at different energy levels, ranging from 100-200 mJ/cm² and a wavelength of 150-400nm, such would activate the photo-initiator and cause a chain reaction. At least one layer can be subjected to relatively high energy levels of up to 700-900 mJ/cm², thereby allowing a relatively low porosity of the resulting cured coating composition. The curing of the top layer of the coating layer can be accompanied or preceded by a very low wavelength of below 220nm and high energy level curing step. In this case, it is possible and even desirable to reduce the amount of photo-initiator as the acrylic compound will be activated even without it, allowing a very high-density top, or (integral) crust layer, to form at the top of the coating. The viscosity of the (uncured) coating layer is preferably smaller than 5000 Pa.s at 25 degrees Celsius, preferably between 500 and 3000 Pa.s at 25 degrees Celsius and more preferably between 800 and 1500 Pa.s at 25 degrees Celsius, in an uncured condition. Hence, said viscosity values apply to the material of the coating layer prior to and/or during applying of the coating layer upon the panel. The surface tension of the applied uncured coating is preferably below 38 dynes per centimeter. In a preferred embodiment, the ratio of the surface energy of the substrate layer to the surface tension of the coating layer is at least 1:1 and more preferably at least 1.5:1.

The coating layer preferably has a thickness of 0.1 mm to 0.5 mm, in particular of 0.2 mm to 0.4 mm. Said relatively thick coating layer enables the application of relatively deep surface textures whilst maintaining the further advantages of the specific panel. The upper surface of the substrate is preferably substantially flat.

Alternatively, the method may further comprise the step of applying a texture onto the (upper surface of the) substrate and in particular the core layer. In case of a panel featuring mechanically applied texture, such as with an embossing or texturing roller or press plate, the texture can be applied directly onto the core featuring the visual. The texture can be for example a stone, tile or wood texture. The texture preferably has a maximum depth of 0.6 mm. The texture, if applied, is preferably applied mechanically before the coating step, and most preferably during an extrusion or thermal lamination step. More specifically, it is preferred that it is a texture of 0.3-0.6 mm deep in particular applied by means of a texture roller or texture plate under high temperature and/or pressure on the upper surface of the substrate. This substrate generally comprises a core and at least one design element, preferably a printed film and/or a digitally printed visual. The variation between depth of the texture across the design is preferably within 0.1 mm to avoid uneven filling of the texture by the coating. The coating or UV-cured finish is then preferably applied in a weight or quantity of less than 100g/m2 to allow deep surface textures. The coating layer can for example be applied via roller coating. It is for example conceivable that an EPDM roller is applied. More in particular, an ethylene propylene rubber (EPDM) roller with a Shore D hardness of about 35 and/or a surface energy of 25 mN/m or 25dyn/cm can be applied. However, it is also conceivable that at least one coating layer is applied via spray coating. The coating layer may comprise a plurality of abrasion resistant particles, in particular chosen from the group of aluminum oxide, corundum, silicon carbide, titanium dioxide, titanium oxide and/or diamond particles or diamond dust. It is conceivable that at least part of the abrasion resistant particles is dispersed in the coating layer. The method according to the present invention may further include the step of applying at least one decorative image onto the core layer. It is also possible that the method includes the step of providing at least one decorative layer onto the core layer. Said step is preferably provided prior to the coating layer is applied. The coating layer can be directly applied upon the decor layer and/or decorative layer.

Alternatively, the method may further comprise the step of applying an at least one film layer, in particular, a print layer. The at least one print layer is provided with at least one printed pattern or printed image. The step of applying a printed pattern, preferably at least part a printed pattern, upon at least is achieved through a printing method, such as but not limited to rotogravure pressing, print rolling, digital printing, inkjet printing, and laser printing. The print layer may be applied on the upper side of a wear layer comprising a base colour and may be made prior or after impregnation. The print may also be made on a raw paper, with or without a base colour and the paper may be indirectly impregnated during pressing by resins from powder, a liquid layer, a liquid dispersion, or impregnated paper applied under and over the digitally printed paper. Other materials for the wear layer may comprise or may be substantially composed of an inherently scratch-resistant thermosetting resin impregnating a carrier layer such as paper or lignocellulose.

It is for example possible that at least part of the print layer comprises a randomized surface pattern. It is also conceivable that at least part of the surface pattern of the print layer defines a repeated pattern. It is thus also possible that is that the print layer has a selectively repetitive pattern.

The at least one print layer could further at least partly be a material selected from the group consisting of thermoplastic material, thermosetting material or a combination thereof. The print layer may for example comprises a material selected from the group consisting of low density polyethylene (LDPE), linear low-density polyethylene (LLDPE), ultra-low density polyethylene (ULDPE), metallocene polyethylene (mPE), high density polyethylene (HDPE), polypropylene (PP), polycarbonate (PC), polyvinyl chloride (PVC), polyester film, polyvinylidene chloride (PVDC), polyamide (PA), or combinations thereof.

The at least one film layer, if applied, is preferably at least partially cured, such that the curing process allows the curing of the empty spaces of the at least partial printed pattern of the at least one print layer. For instance, the at least one print layer or film layer is at least partly cured with UV light, with further curing steps made optional.

The at least one film layer is then preferably subject to removal of the least in part the uncured film. In the embodiment, surface roughness is less than 1 µm Ra, with low surface roughness due to minimization of peaks, valleys, and undulations on the surface, rendering the at least one film layer relatively flat and/or smooth. In this case, the relatively low roughness will cause a glossy surface of at least 60%, preferably in the range of 80% to 100%.

The invention will be elucidates based on the following non-limitative clauses.
1. Decorative panel, in particular a floor panel, wall panel or ceiling panel, the panel comprising:
   - at least one substrate comprising an upper surface and a bottom surface, wherein the substrate comprises:
      ∘ at least one core layer; and
      ∘ at least one decorative layer; and
   - at least one coating layer, wherein the coating layer is provided upon the upper surface of the substrate and/or wherein at least part of the upper surface of the coating layer is textured.
2. Panel according to clause 1, wherein the upper surface of the substrate layer is substantially flat.
3. Panel according to clause 1 or clause 2, wherein the coating layer is provided in a weight of at least 50 g/m2, preferably at least 100 g/m2, more preferably at least 150 g/m2.
4. Panel according to any of the previous clauses, wherein the coating layer has a thickness of at least 0.1 mmm, preferably at least 0.2 mm.
5. Panel according to clause 4, wherein the coating layer has a thickness in the range of 0.2 mm to 0.5 mm.
6. Panel according to any of the previous clauses, wherein the coating layer comprises multiple coating sublayers.
7. Panel according to clause 6, comprising at least 5 coating sublayers.
8. Panel according to clause 6 or 7, comprising 7 to 9 coating sublayers.
9. Panel according to any of the previous clauses, wherein at least part of the texture has a dept in the range of 0.05 to 0.4 mm.
10. Panel according to any of the previous clauses, wherein the upper surface of the substrate has a Shore D hardness of at least 80, preferably at least 85.
11. Panel according to any of the previous clauses, wherein the coating layer has a Shore D hardness of at least 85, preferably at least 90.
12. Panel according to any of the previous clauses, wherein the coating layer is directly provided upon the decorative layer of the substrate.
13. Panel according to any of the previous clauses, wherein the coating layer comprises at least one thermosetting resin.
14. Panel according to any of the previous clauses, wherein the coating layer comprises at least one crosslinkable prepolymer and at least one photo-initiator.
15. Panel according to clause 14, wherein the prepolymer is an acrylic prepolymer or a polyurethane prepolymer.
16. Panel according to any of the previous clauses, wherein the coating layer comprises a plurality of abrasion resistant particles, in particular chosen from the group of: aluminum oxide, corundum, silicon carbide, titanium dioxide, titanium oxide, diamond particles, or combinations thereof.
17. Panel according to clause 16, wherein the coating layer comprises abrasion resistant particles in the range of 0.5 to 5 wt%.
18. Panel according to any of the previous clauses, wherein the coating layer is substantially transparent after a curing process.
19. Panel according to any of the previous clauses, wherein the coating layer comprises at least one matting agent.
20. Panel according to any of the previous clauses, wherein at least part of the top layer of the coating layer is a high-density top or wherein a crust layer, in particular an integrally formed crust layer, is formed at the top of the coating.
21. Panel according to any of the previous clauses, wherein the coating layer comprises at least one UV additive.
22. Panel according to clause 21, wherein the UV additive comprises titanium dioxide, zirconium dioxide and/or silicon dioxide.
23. Panel according to any of the previous clauses, comprising a decorative layer provided, wherein the at least one decorative layer is a print layer.
24. Panel according to any of the previous clauses, wherein the core layer of the substrate comprises a mineral thermoplastic composite.
25. Panel according to any of the previous clauses, wherein the substrate, and in particular the core layer, comprises at least one pair of opposite side edges, and wherein each pair of opposite side edges is provided with one or more complementary coupling parts.
26. Method for producing a decorative panel, in particular a floor panel, wall panel or ceiling panel, preferably according to any of the previous clauses, comprising the steps of:
   a) providing at least one substrate comprising an upper surface and a bottom surface and two pairs of opposing side edges, wherein the substrate comprises:
      ∘ at least one core layer; and
      ∘ at least one decorative layer; and
   b) applying at least one coating layer upon the upper surface of the substrate;
   c) enabling at least part of the coating to cure such that a semi cured coating layer is obtained; and
   d) applying a texture upon at least part of the upper surface of the semi cured coating layer.
27. Method according to clause 26, comprising the steps of applying a plurality of coating sublayers, wherein each applied coating sublayer is at least partially cured prior to applying a subsequent coating sublayer such that a semi cured coating layer is obtained.
28. Method according to clause 26 or 27, wherein at least part of the texture is applied via at least one roller.
29. Method according to clause 28, wherein the surface energy of the roller is lower than the surface energy of the semi cured coating layer.
30. Method according to any of clauses 26 to 29, wherein the coating layer is applied in a quantity of at least 50 g/m2, preferably at least 100 g/m2, more preferably at least 150 g/m2.
31. Method according to any of clauses 26 to 30, wherein at least part of the texture has a dept in the range of 0.05 to 0.4 mm.
32. Method according to any of clauses 26 to 31, wherein the curing step is an UV curing step
33. Method according to clause 32, wherein the curing step is an UV curing step having a wavelength from 390 - 450 nm.

It will be apparent that the invention is not limited to the examples described, but that numerous variants are possible within the scope of the attached claims that will be obvious to a person skilled in the art. It is not necessary to elaborate on examples of all conceivable combinations of the above-described inventive concepts, as a person skilled in the art will understand numerous inventive concepts can be (re)combined in order to arrive at a specific application.

The verb "comprise" and conjugations thereof used in this patent publication are understood to mean not only "comprise", but are also understood to mean the phrases "contain", "substantially consist of", "formed by" and conjugations thereof.

## Claims

1. Decorative panel, in particular a floor panel, wall panel or ceiling panel, the panel comprising:
- at least one substrate comprising an upper surface and a bottom surface, wherein the substrate comprises:
∘ at least one core layer; and
∘ at least one decorative layer; and
- at least one coating layer, wherein the coating layer is provided upon the upper surface of the substrate and wherein at least part of the upper surface of the coating layer is textured.

2. Panel according to claim 1, wherein the upper surface of the substrate layer is substantially flat.

3. Panel according to claim 1 or claim 2, wherein the coating layer has a thickness in the range of 0.2 mm to 0.5 mm and wherein at least part of the texture has a dept in the range of 0.05 to 0.4 mm.

4. Panel according to any of the previous claims, wherein the coating layer comprises multiple coating sublayers.

5. Panel according to claim 4, comprising at least 5 coating sublayers.

6. Panel according to any of the previous claims, wherein the upper surface of the substrate has a Shore D hardness of at least 80, preferably at least 85 and/or wherein the coating layer has a Shore D hardness of at least 85, preferably at least 90.

7. Panel according to any of the previous claims, wherein the coating layer is directly provided upon the decorative layer of the substrate.

8. Panel according to any of the previous claims, wherein the coating layer comprises at least one thermosetting resin.

9. Panel according to any of the previous claims, wherein the coating layer comprises at least one crosslinkable prepolymer and at least one photo-initiator, wherein the crosslinkable prepolymer is in particular an acrylic prepolymer or a polyurethane prepolymer.

10. Panel according to any of the previous claims, wherein the coating layer comprises a plurality of abrasion resistant particles, in particular chosen from the group of: aluminum oxide, corundum, silicon carbide, titanium dioxide, titanium oxide, diamond particles, and combinations thereof, preferably wherein the coating layer comprises abrasion resistant particles in the range of 0.5 to 5 wt%.

11. Panel according to any of the previous claims, wherein the coating layer comprises at least one UV additive, in particular wherein the UV additive comprises titanium dioxide, zirconium dioxide and/or silicon dioxide.

12. Method for producing a decorative panel, in particular a floor panel, wall panel or ceiling panel, comprising the steps of:
a) providing at least one substrate comprising an upper surface and a bottom surface and two pairs of opposing side edges, wherein the substrate comprises:
∘ at least one core layer; and
∘ at least one decorative layer; and
b) applying at least one coating layer upon the upper surface of the substrate;
c) enabling at least part of the coating to cure such that a semi cured coating layer is obtained; and
d) applying a texture upon at least part of the upper surface of the semi cured coating layer.

13. Method according to claim 12, comprising the steps of applying a plurality of coating sublayers, wherein each applied coating sublayer is at least partially cured prior to applying a subsequent coating sublayer such that a semi cured coating layer is obtained.

14. Method according to claim 12 or 13, wherein at least part of the texture is applied via at least one roller, wherein the surface energy of the roller is lower than the surface energy of the semi cured coating layer.

15. Method according to any of claims 12 to 14, wherein the coating layer is applied in a quantity of at least 50 g/m2, preferably at least 100 g/m2, more preferably at least 150 g/m2 and/or wherein at least part of the texture has a depth in the range of 0.05 to 0.4 mm.
